# FASCICULE DE BREVET EUROPEEN

(11) **EP 3 512 773 B1**
(45) Date de publication et mention de la délivrance du brevet: **05.08.2020**
(21) Numéro de dépôt: 17780801.1
(22) Date de dépôt: 12.09.2017
(51) Int. Cl.: B64D 41/00

(54) **DISPOSITIF D'ALIMENTATION EN ENERGIE DANS UN AERONEF ET PROCEDE DE REFROIDISSEMENT DE CE DISPOSITIF**
VORRICHTUNG ZUR ENERGIEVERSORGUNG IN EINEM FLUGZEUG UND VERFAHREN ZUR KÜHLUNG DIESER VORRICHTUNG
DEVICE FOR SUPPLYING ENERGY IN AN AIRCRAFT AND METHOD FOR COOLING THIS DEVICE

(30) Priorité: 15.09.2016 FR 1658640
(43) Date de publication de la demande: 24.07.2019
(73) Titulaire: Safran Power Units, 31200 Toulouse (FR)
(72) Inventeur: BOUDJEMAA, Fabien, 77550 Moissy-Crayamel Cedex (FR); GASSE, Adrien, 77550 Moissy-Crayamel Cedex (FR); BARON, Matthieu, 77550 Moissy-Crayamel Cedex (FR); REAL, Denis, 77550 Moissy-Crayamel Cedex (FR)
(74) Mandataire: Cabinet Beau de Loménie
(86) Numéro de dépôt international: PCT/FR2017/052416
(87) Numéro de publication internationale: WO 2018/051004

(56) Documents cités:
- EP-A1- 2 991 144
- FR-A1- 3 013 683
- US-A1- 2016 159 466

## Description

### Arrière-plan de l'invention

L'invention concerne un dispositif d'alimentation en énergie électrique dans un aéronef et un procédé de refroidissement de ce dispositif d'alimentation.

Les unités d'alimentation d'urgence, couramment désignées sous l'acronyme EPU («Emergency Power Unit »), permettent de fournir une alimentation électrique de secours en cas de perte des générateurs électriques primaires, permettant notamment l'alimentation électrique des commandes de vols lors de la phase d'atterrissage de l'aéronef.

Divers systèmes de génération d'énergie électrique pour des unités d'alimentation d'urgence sont connus de l'état de la technique. De tels systèmes peuvent comporter une pile à combustible produisant de l'énergie électrique dont l'anode est reliée à un réservoir de gaz sous pression. A titre d'exemple, une pile à combustible à membrane échangeuse de protons haute température HT-PEMFC (« High Temperature - Proton Exchange Membrane Fuel Cells ») est associée à un générateur d'hydrogène et alimente électriquement un ensemble d'électronique de puissance à des températures comprises entre 110°C et 220°C en régime stabilisé. Une telle pile a notamment pour avantage de présenter un rendement énergétique élevé, typiquement de l'ordre de 50%.

En vue de fonctionner dans cet intervalle de température, une pile à combustible de type HT-PEMFC nécessite l'évacuation d'une énergie thermique au moins égale à l'énergie électrique produite par celle-ci : un système fonctionnant à 15 kWe par exemple nécessite d'évacuer au moins 15 kWth. Le système environnant à la pile, notamment le générateur de gaz et l'électronique de puissance alimentée par la pile, nécessitent par ailleurs un système de refroidissement.

Une solution envisagée pour évacuer l'énergie thermique de la pile pourrait s'appuyer sur le système de contrôle de l'environnement ECS (« Environmental Control System ») de l'aéronef. Cependant, une telle solution s'avère limitée, notamment pour les avions d'affaires, l'ECS ne permettant d'évacuer que quelques kWth (généralement de l'ordre de 5kWth). Une autre solution pourrait consister en l'utilisation d'une source froide liquide en vue de refroidir la pile à combustible, cependant une telle source froide n'est pas toujours disponible, comme c'est le cas par exemple dans les avions d'affaire. Une autre solution pourrait consister en un système de prélèvement d'air externe, tel que divulgué par le document FR 3 013 683 A1. Un tel système peut être réalisé par exemple à l'aide d'une écope. Cependant, la présence d'un tel système de prélèvement d'air viendrait alors dégrader les performances de l'aéronef durant son fonctionnement nominal, et ce même en l'absence de panne des générateurs électriques primaires. En effet, un tel système de prélèvement serait présent en permanence, dégraderait l'aérodynamisme et la trainée de l'aéronef et impliquerait en outre une augmentation en encombrement et en masse.

Les solutions proposées ci-dessous ne permettent donc pas pour une pile à combustible haute température d'évacuer une énergie thermique suffisante ou viennent fortement dégrader les performances de l'aéronef.

### Objet et résumé de l'invention

La présente invention a pour but de remédier aux inconvénients précités.

A cet effet, l'invention propose un aéronef comportant un dispositif d'alimentation en énergie électrique dans un aéronef comprenant une enceinte, cette enceinte comprenant au moins:
- une pile à combustible destinée à générer de l'énergie électrique comprenant une anode et une cathode ;
- un générateur de dihydrogène ;
- un circuit d'alimentation en gaz reliant le générateur de dihydrogène à l'anode de la pile à combustible ;
- un dispositif d'alimentation en oxygène configuré pour alimenter la cathode de la pile à combustible ;
- un circuit de refroidissement de la pile à combustible associé à au moins un échangeur thermique ;
l'enceinte de ce dispositif étant montée sur un système d'actionnement, le système d'actionnement étant configuré pour déplacer l'enceinte d'une première position dans laquelle l'enceinte est logée à l'intérieur d'une paroi externe de l'aéronef à une deuxième position dans laquelle l'enceinte est en saillie de de la paroi externe de l'aéronef.

Ce dispositif est particulièrement avantageux en ce que lorsque l'enceinte est déployée dans la deuxième position l'air extérieur à l'aéronef permet de refroidir celle-ci et assure ainsi une régulation passive de la thermique des composants du dispositif. Cette régulation permet notamment le refroidissement de la pile à combustible, d'une électronique de puissance associée à celle-ci, ainsi que du générateur de dihydrogène. Il devient alors possible d'intégrer une pile à combustible haute puissance embarqué dans des avions à taille réduite, alors qu'en pratique ce type de pile ne pouvait être embarqué. Un autre avantage du déploiement de l'enceinte dans la deuxième position est lié au fait que l'hydrogène en sortie de la pile peut être directement évacué vers l'extérieur de l'aéronef. Par ailleurs, le fait de délocaliser le générateur de dihydrogène à l'extérieur de l'aéronef lors son fonctionnement permet d'empêcher tout risque de fuite de dihydrogène dans la soute ou la cabine de l'aéronef, améliorant ainsi sa sécurité.

Selon un autre aspect, dans ce dispositif d'alimentation, l'enceinte comprend au moins une ouverture en amont et au moins une ouverture en aval selon la direction de vol de l'aéronef.

Selon un autre aspect, dans ce dispositif d'alimentation, l'échangeur thermique est disposé en amont de l'enceinte et le générateur de dihydrogène en aval de l'enceinte selon la direction de vol de l'aéronef.

Selon un autre aspect, dans ce dispositif d'alimentation, le générateur de dihydrogène est disposé en amont de l'enceinte et l'échangeur thermique en aval de l'enceinte selon la direction de vol de l'aéronef.

Selon un autre aspect, dans ce dispositif d'alimentation, l'enceinte comprend un ventilateur configuré pour évacuer l'énergie thermique générée par la pile à combustible lorsque l'enceinte est dans la deuxième position et que la vitesse de déplacement de l'aéronef est en dessous d'un seuil prédéterminé.

Selon un autre aspect, dans ce dispositif d'alimentation, le système d'actionnement comprend des moyens de déplacement mécaniques configurés pour déplacer l'enceinte depuis la première position vers la deuxième position.

Selon un autre aspect, dans ce dispositif d'alimentation, le système d'actionnement comprend des moyens de déplacement électromagnétiques configurés pour déplacer l'enceinte depuis la première position vers la deuxième position.

Selon un autre aspect, dans ce dispositif d'alimentation, la pile à combustible est une pile à combustible à membrane échangeuse de protons haute température.

L'invention propose également un procédé de refroidissement d'un dispositif d'alimentation en énergie électrique, le dispositif d'alimentation comprenant une enceinte, cette enceinte comprenant au moins:
- une pile à combustible destinée à générer de l'énergie électrique comprenant une anode et une cathode ;
- un générateur de dihydrogène ;
- un circuit d'alimentation en gaz reliant le générateur de dihydrogène à l'anode de la pile à combustible ;
- un dispositif d'alimentation en oxygène configuré pour alimenter la cathode de la pile à combustible ;
- un circuit de refroidissement de la pile à combustible associé à au moins un échangeur thermique ;
ce procédé comprenant le déplacement de l'enceinte d'une première position dans laquelle l'enceinte est logée à l'intérieur d'une paroi externe de l'aéronef à une deuxième position dans laquelle l'enceinte est en saillie de de la paroi externe de l'aéronef.

Selon un autre aspect, ce procédé comprend en outre une étape de ventilation à l'intérieur de l'enceinte lorsque l'enceinte est dans la deuxième position et que la vitesse de déplacement de l'aéronef est en dessous d'un seuil prédéterminé.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue de côté d'un aéronef comprenant un dispositif d'alimentation avec une enceinte selon un mode de réalisation,
- la figure 2 est une vue de côté d'un aéronef comprenant un dispositif d'alimentation avec une enceinte selon un autre mode de réalisation,
- les figure 3A et 3B sont une vue de côté d'un aéronef comprenant un système d'actionnement pour une enceinte d'un dispositif d'alimentation selon un mode de réalisation,
- les figure 4A et 4B sont une vue de côté d'un aéronef comprenant un système d'actionnement pour une enceinte d'un dispositif d'alimentation selon un autre mode de réalisation,
- les figure 5A et 5B sont une vue de côté d'un aéronef comprenant un système d'actionnement pour une enceinte d'un dispositif d'alimentation selon autre un mode de réalisation.

### Description détaillée de modes de réalisation

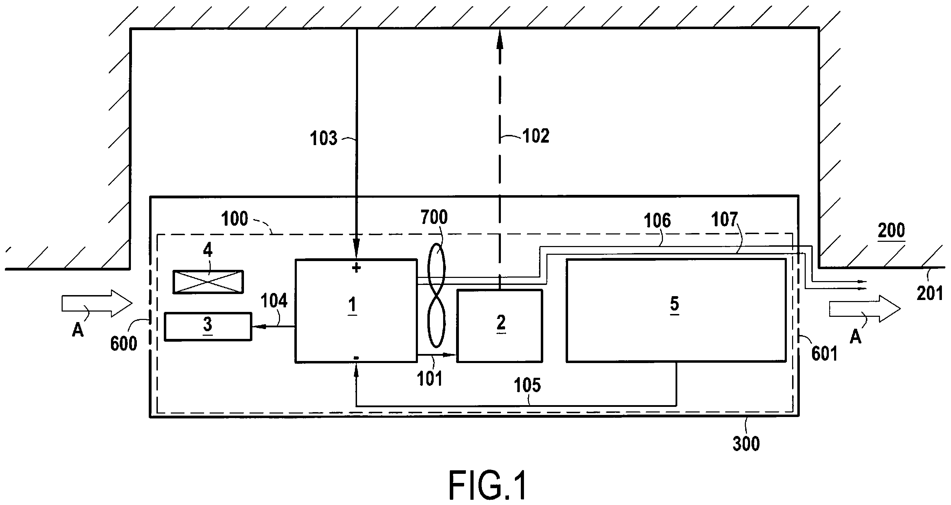

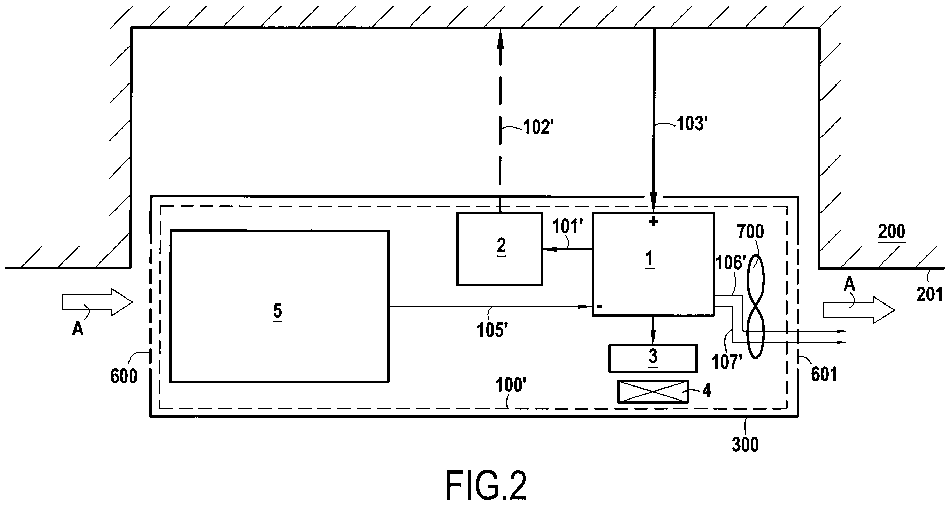

Les figures 1 et 2 illustrent de manière simplifiée l'architecture d'un dispositif d'alimentation en énergie électrique d'un aéronef 200. Le dispositif comprend un système 100, 100' de génération d'énergie électrique, utilisé par exemple pour la réalisation d'une unité d'alimentation d'urgence EPU de l'aéronef 200.

Le système 100, 100' comprend une pile à combustible 1 destinée à générer de l'énergie électrique pour alimenter (flèches 101, 101') un ensemble d'électronique de puissance 2. L'électronique de puissance 2 alimente (flèches pointillées 102, 102') diverses charges électriques de l'aéronef 200 telles les commandes de vol en cas de perte des générateurs électriques primaires.

La pile à combustible 1 comprend une cathode + et une anode -. La pile à combustible est par exemple, mais non-nécessairement, une pile à combustible à membrane échangeuse de protons haute température HT-PEMFC. Un dispositif d'alimentation en oxygène, non-illustré, alimente (flèches 103, 103') en oxygène la cathode + de la pile à combustible 1. Un tel dispositif d'alimentation en oxygène est par exemple réalisé à partir d'une bouteille d'oxygène sous pression ou par filtrage puis compression de l'air de la cabine issu de l'aéronef 200. La pile à combustible 1 est en outre interfacée avec un circuit de refroidissement 3 associé à au moins un échangeur thermique 4. La pile à combustible 1 évacue (flèche 104, 104') ainsi une partie de l'énergie thermique générée via le circuit de refroidissement 3.

Un générateur de dihydrogène 5 est relié (flèches 105 105') via l'intermédiaire d'un circuit d'alimentation en gaz, non-illustré, à l'anode - de la pile à combustible 1. Le générateur de dihydrogène 5 est à titre d'exemple un générateur de gaz pyrotechnique. De manière connue, un tel générateur peut comporter un ou plusieurs logements, chacun comprenant un chargement pyrotechnique se présentant sous la forme d'un bloc monolithique ou d'un matériau granulaire. Un dispositif d'allumage à déclenchement électrique ou mécanique vient allumer les chargements pyrotechniques, enclenchant ainsi leur combustion et la libération des gaz issus de la combustion. Le choix de la composition, des dimensions et de la durée de fonctionnement des chargements pyrotechniques pour la réalisation d'un tel générateur de dihydrogène est connu de l'homme du métier. Les gaz issus de la combustion peuvent directement passer dans le circuit d'alimentation en gaz ou s'écouler dans une chambre de stockage reliée à ce circuit. Avant d'atteindre l'anode - de la pile à combustible 1, les gaz issus de la combustion peuvent passer par un détendeur de sorte à abaisser leur pression puis par un conditionneur thermique pour abaisser leur température de manière à être adaptés aux conditions de fonctionnement de la pile. Le conditionneur thermique peut en outre être refroidi à l'aide du circuit de refroidissement 3 de la pile à combustible 1.

En variante, le générateur de dihydrogène 5 peut être un dispositif de stockage de gaz, par exemple une bouteille d'hydrogène sous pression.

Le système 100, 100' comprend en outre une ligne de purge d'hydrogène (flèches 106, 106') et une ligne de purge de d'oxygène (flèches 107, 107') dans lesquelles respectivement de l'hydrogène et de l'oxygène sont destinés à s'écouler afin d'être évacué vers l'extérieur du système. Un dispositif de régulation de pression comportant au moins un capteur de pression, des déverseurs ou des électrovannes d'évacuation est associé à ces lignes de purge et contrôle alors l'évacuation de l'oxygène ou de l'hydrogène lorsque la pression dans le système 100, 100' dépasse une valeur prédéterminée.

Le système 100, 100' de génération d'énergie précédemment décrit est connu de l'homme du métier.

Selon l'invention, le système 100, 100' est disposé dans un volume fermé, par exemple une enceinte 300. L'enceinte 300 est associée à un système d'actionnement permettant de déplacer celle-ci depuis une première position où elle est logée dans une paroi externe 201 de l'aéronef 200 à une deuxième position pour laquelle l'enceinte est en saillie de la paroi externe 201 de l'aéronef 200.

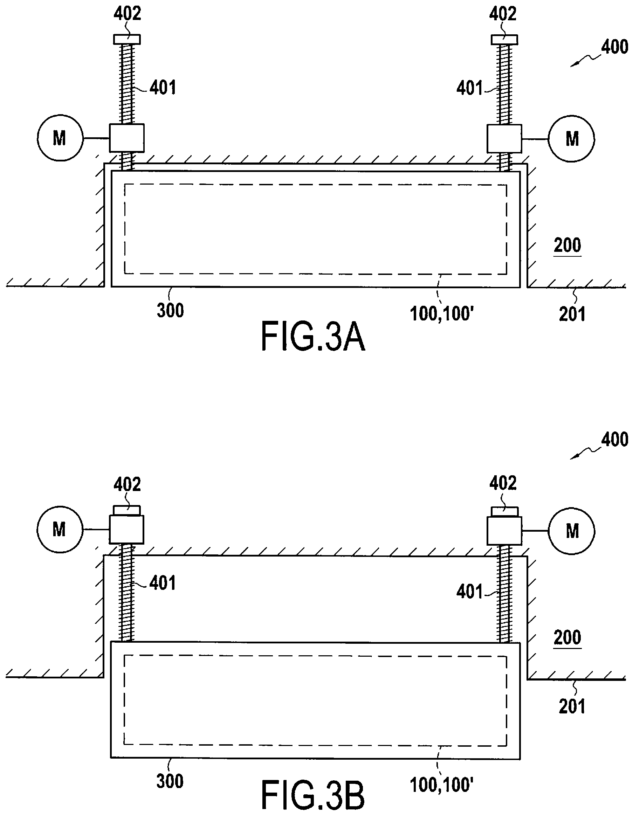

Les figures 3A, 4A et 5A illustrent l'enceinte 300 dans la première position, tandis que les figures 1, 2, 3B, 4B et 5B illustrent l'enceinte 300 dans la deuxième position.

Divers exemples de systèmes d'actionnement 400, 400', 400" pour le déplacement de l'enceinte 300 sont illustrés sur les figures 3A-5B.

Les figures 3A-4B illustrent des systèmes d'actionnement 400, 400' mettant en œuvre des moyens de déplacement mécaniques.

Sur les figure 3A et 3B, le déplacement de l'enceinte 300 est réalisé à partir d'une ou plusieurs vis sans fin 401 motorisées assurant la liaison entre l'enceinte 300 et l'aéronef 200. La rotation de chaque vis sans fin 401 est contrôlée à partir d'au moins un moteur M. Lors d'une perte des générateurs primaires de l'aéronef 200, les vis sans fin motorisées sont commandées pour déplacer l'enceinte 300 depuis la première position (Figure 3A) vers la deuxième position (Figure 3B). En fin de course des vis sans fin 401 motorisées, des butées 402 disposées à l'extrémité des vis sans fin 401 permettent d'assurer le maintien de l'enceinte 300 à l'aéronef 200, une fois que l'enceinte 300 a atteint la deuxième position. En alternative des vis sans fin 401, le déplacement de l'enceinte peut être assuré par des vérins pilotés par les moteurs M.

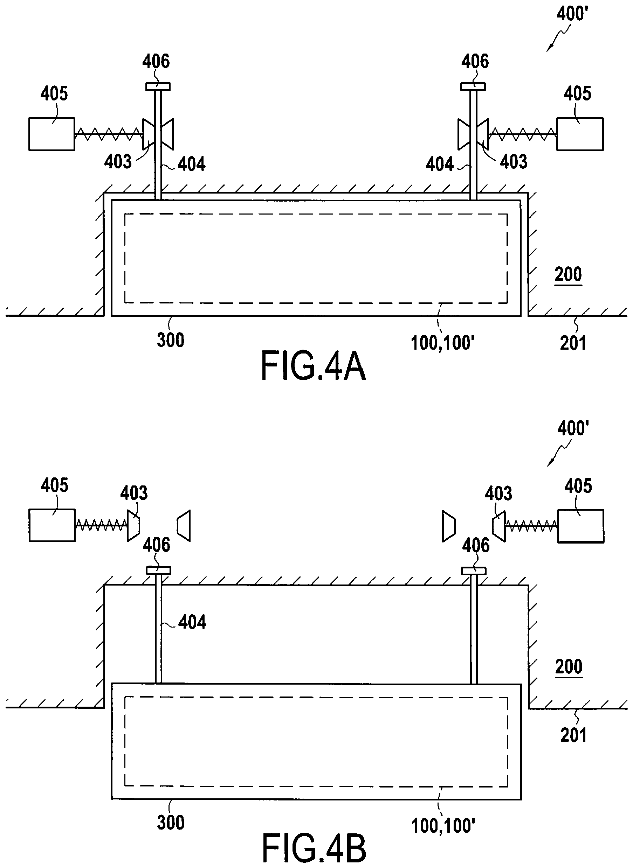

Sur la figure 4A, l'enceinte 300 est maintenue selon la première position à l'aide de mâchoires de maintien 403 assurant le maintien de tiges 404 reliant l'enceinte 300 à l'aéronef 200. Lors d'une perte des générateurs primaires de l'aéronef 200, des éléments pyrotechniques 405 sont actionnés, de manière à déclencher l'ouverture des mâchoires de maintien 403 et ainsi libérer des tiges 404 des mâchoires de maintien 403. Sous l'effet de sa masse, l'enceinte 300 se déplace alors vers la deuxième position et entraine les tiges 404 dans son déplacement. Des butées 406 disposées à l'extrémité des tiges 404 viennent ensuite assurer le maintien de l'enceinte 300 à l'aéronef 200 dès que l'enceinte 300 atteint la deuxième position (Figure 4B).

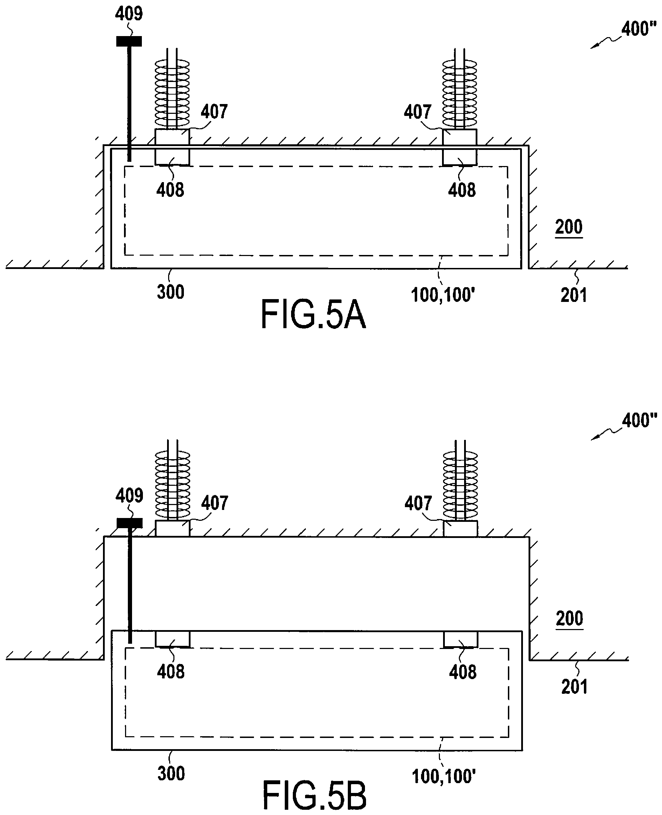

Les figures 5A et 5B illustrent un exemple de système d'actionnement 400" comprenant des moyens de déplacement électromagnétiques. Des électroaimants 407 disposés dans l'aéronef 200 assurent le maintien de l'enceinte 300 dans la première position en exerçant un champ électromagnétique sur des aimants 408 disposés dans l'enceinte 300 (Figure 5A). Lors d'une perte des générateurs primaires de l'aéronef 200, les électroaimants 407 sont configurés pour cesser d'exercer le champ électromagnétique sur les aimants 408 et l'enceinte sous l'effet de sa masse se déplace alors vers la deuxième position. Au moins une butée mécanique 409 vient alors assurer le maintien de l'enceinte 300 à l'aéronef 200 dès que l'enceinte 300 atteint la deuxième position (Figure 5B).

Les figures 1 et 2 illustrent l'enceinte 300 dans la deuxième position, c'est-à-dire en saillie par rapport à la paroi externe 201 de l'aéronef. Avantageusement, la mise en contact de l'enceinte 300 avec l'air extérieur à l'aéronef 200 permet de refroidir celle-ci et ainsi assurer une régulation passive de la thermique des composants présents dans le système 100, 100' de génération d'énergie, notamment le refroidissement de la pile à combustible 1, de l'électronique de puissance ainsi que du générateur de dihydrogène 5.

Par ailleurs, afin d'améliorer le refroidissement de l'enceinte 300, au moins une ouverture 600 en amont et au moins une ouverture 601 en aval de l'enceinte 300 peuvent être pratiquées dans celle-ci, les positions amont et aval étant définis ici par rapport à la direction de vol de l'aéronef 200. A titre d'exemple, les figures 1 et 2 illustrent une grille 600, 601 multi-perforée disposée respectivement en amont et en aval de l'enceinte 300. Ainsi, lorsque l'enceinte 300 est déployée dans la deuxième position, un flux d'air A peut venir traverser l'enceinte d'amont en aval et permettre le refroidissement du système 100, 100' de génération d'énergie.

Un autre avantage du déploiement de l'enceinte 300 dans la deuxième position est lié à la présence de la ligne de purge d'hydrogène : l'hydrogène en sortie de la pile à combustible 1 peut alors directement être évacué vers l'extérieur de l'aéronef 200 avec le flux d'air A.

Par ailleurs, le fait de délocaliser le générateur de dihydrogène 5 à l'extérieur de l'aéronef 200 lors de la mise en fonctionnement du système 100, 100' de génération d'énergie permet d'empêcher tout risque de fuite de dihydrogène en cabine ou dans la soute de l'aéronef 200, améliorant ainsi sa sécurité.

Pour assurer le refroidissement des composants présents dans le système 100, 100' divers agencements de ces composants peuvent être envisagés.

Dans un premier mode de réalisation illustré sur la figure 1, l'échangeur thermique 4 associé au circuit de refroidissement 3 de la pile à combustible 1 est disposé en amont de l'enceinte 300, par exemple au plus proche du flux d'air A entrant par l'ouverture 600, de manière à présenter la température la plus basse possible. La pile à combustible 1 dispose ainsi d'un circuit de refroidissement 3 apte à évacuer l'énergie thermique nécessaire à son bon fonctionnement. L'électronique de puissance 2, dont la température de fonctionnement ne doit typiquement pas dépasser les 80°C est alors disposée en aval de l'échangeur thermique 4. Enfin, le générateur de dihydrogène 5 dont la température peut dépasser les 200°C est disposé en aval de l'enceinte 300, par exemple au plus près de l'ouverture 601 traversée par le flux d'air A sortant, cette disposition permettant d'assurer la dissipation de la chaleur généré par celui-ci. Un seul échangeur thermique 4 est ici illustré, mais il est entendu qu'une pluralité d'échangeurs thermiques peuvent être disposés en amont de l'enceinte 300.

Dans un deuxième mode de réalisation illustré sur la figure 2, le générateur de dihydrogène 5 dont la température peut excéder les 200°C est disposé en amont de l'enceinte 300, par exemple au plus proche du flux d'air A entrant par l'ouverture 600. L'électronique de puissance 2 et la pile à combustible 1 sont alors disposés en aval du générateur de dihydrogène 5. L'échangeur thermique 4 associé au circuit de refroidissement 3 de la pile à combustible 1 est disposé en aval de l'enceinte 300, par exemple au plus proche du flux d'air sortant par l'ouverture 601. Avantageusement, grâce à un tel agencement le flux d'air A entrant en amont de l'enceinte 300 vient refroidir le générateur de dihydrogène 5, tandis que la chaleur générée par le générateur d'hydrogène 5 vient réchauffer ce flux d'air. Le flux d'air ainsi réchauffé traverse alors d'amont en aval l'enceinte 300, et présente ainsi une température adaptée à la fois pour prévenir tout risque de givrage des composants du système 100', notamment de l'électronique de puissance 2, et suffisante à l'échangeur thermique 4 pour assurer le refroidissement de la pile à combustible 1.

Par ailleurs, les systèmes 100, 100' peuvent comprendre un ventilateur 700 configuré pour aspirer de l'air extérieur à l'aéronef et évacuer l'énergie thermique nécessaire au bon fonctionnement de la pile à combustible. Ainsi, lorsque l'enceinte 300 est dans la deuxième position et que la vitesse de l'aéronef passe en dessous d'un seuil prédéterminé, le fonctionnement du ventilateur 700 est commandé. Une telle situation peut par exemple survenir en fin de vol, lorsque la vitesse de l'aéronef 200 diminue en même temps que son altitude. Le ventilateur 700 vient alors évacuer une partie de chaleur émise par la pile à combustible 1 et le générateur d'hydrogène 5.

## Revendications

1. Aéronef comportant un dispositif d'alimentation en énergie électrique comprenant une enceinte (300), cette enceinte (300) comprenant au moins:
- une pile à combustible (1) destinée à générer de l'énergie électrique comprenant une anode (-) et une cathode (+) ;
- un générateur de dihydrogène (5) ;
- un circuit d'alimentation en gaz reliant le générateur de dihydrogène (5) à l'anode (-) de la pile à combustible (1) ;
- un dispositif d'alimentation en oxygène configuré pour alimenter la cathode (+) de la pile à combustible (1) ;
- un circuit de refroidissement (3) de la pile à combustible (1) associé à au moins un échangeur thermique (4) ;
Cet aéronef étant **caractérisé en ce qu'**il comporte en outre un système d'actionnement (400, 400', 400") sur lequel l'enceinte (300) est montée, le système d'actionnement (400, 400', 400") étant configuré pour déplacer l'enceinte (300) d'une première position dans laquelle l'enceinte (300) est logée à l'intérieur d'une paroi externe (201) de l'aéronef (200) à une deuxième position dans laquelle l'enceinte (300) est en saillie de de la paroi externe (201) de l'aéronef (200).

2. Aéronef selon la revendication 1, dans lequel l'enceinte (300) comprend au moins une ouverture (600) en amont et au moins une ouverture (601) en aval selon la direction de vol de l'aéronef (200).

3. Aéronef selon les revendications 1 ou 2, dans lequel l'échangeur thermique (4) est disposé en partie amont de l'enceinte (300) et le générateur de dihydrogène (5) en partie aval de l'enceinte (300) selon la direction de vol de l'aéronef (200).

4. Aéronef selon les revendications 1 ou 2, dans lequel le générateur de dihydrogène (5) est disposé en partie amont de l'enceinte (300) et l'échangeur thermique (4) en partie aval de l'enceinte (300) selon la direction de vol de l'aéronef (200).

5. Aéronef selon l'une quelconque des revendications 1 à 4, dans lequel l'enceinte (300) comprend en outre un ventilateur (700) configuré pour évacuer l'énergie thermique générée par la pile à combustible (1) lorsque l'enceinte (300) est dans la deuxième position et que la vitesse de déplacement de l'aéronef (200) est en dessous d'un seuil prédéterminé.

6. Aéronef selon l'une quelconque des revendications 1 à 5, dans lequel le système d'actionnement (400, 400') comprend des moyens de déplacement mécaniques configurés pour déplacer l'enceinte (300) depuis la première position vers la deuxième position.

7. Aéronef selon l'une quelconque des revendications 1 à 5, dans lequel le système d'actionnement (400") comprend des moyens de déplacement électromagnétiques configurés pour déplacer l'enceinte (300) depuis la première position vers la deuxième position.

8. Aéronef selon l'une quelconque des revendications 1 à 7, dans lequel la pile à combustible (1) est une pile à combustible à membrane échangeuse de protons haute température.

9. Procédé de refroidissement d'un dispositif d'alimentation en énergie électrique d'un aéronef, le dispositif d'alimentation comprenant une enceinte (300), cette enceinte (300) comprenant au moins:
- une pile à combustible (1) destinée à générer de l'énergie électrique comprenant une anode (-) et une cathode (+) ;
- un générateur de dihydrogène (5) ;
- un circuit d'alimentation en gaz reliant le générateur de dihydrogène (5) à l'anode (-) de la pile à combustible (1) ;
- un dispositif d'alimentation en oxygène configuré pour alimenter la cathode (+) de la pile à combustible (1) ;
- un circuit de refroidissement (3) de la pile à combustible (1) associé à au moins un échangeur thermique (4) ;
ce procédé étant **caractérisé en ce qu'**il comprend le déplacement de l'enceinte (300) d'une première position dans laquelle l'enceinte (300) est logée à l'intérieur d'une paroi externe (201) de l'aéronef (200) à une deuxième position dans laquelle l'enceinte (300) est en saillie de la paroi externe (201) de l'aéronef (200).

10. Procédé selon la revendication 9 comprenant en outre une étape de ventilation à l'intérieur de l'enceinte (300) lorsque l'enceinte (300) est dans la deuxième position et que la vitesse de déplacement de l'aéronef (200) est en dessous d'un seuil prédéterminé.

## Patentansprüche

1. Luftfahrzeug, umfassend eine Vorrichtung zur Versorgung mit elektrischer Energie, die ein Gehäuse (300) umfasst, wobei dieses Gehäuse (300) wenigstens umfasst:
- eine Brennstoffzelle (1) zur Erzeugung von elektrischer Energie, die eine Anode (-) und eine Kathode (+) umfasst,
- einen Diwasserstoffgenerator (5),
- einen Gasversorgungskreis, der den Diwasserstoffgenerator (5) mit der Anode (-) der Brennstoffzelle (1) verbindet,
- eine Sauerstoffversorgungsvorrichtung, die dazu ausgelegt ist, die Kathode (+) der Brennstoffzelle (1) zu versorgen,
- einen Kreis zum Kühlen (3) der Brennstoffzelle (1), der wenigstens einem Wärmetauscher (4) zugeordnet ist,
wobei dieses Luftfahrzeug **dadurch gekennzeichnet ist, dass** es ferner ein Betätigungssystem (400, 400', 400") umfasst, an dem das Gehäuse (300) angebracht ist, wobei das Betätigungssystem (400, 400', 400") dazu ausgelegt ist, das Gehäuse (300) aus einer ersten Position, in der das Gehäuse (300) innerhalb einer Außenwand (201) des Luftfahrzeugs (200) untergebracht ist, zu einer zweiten Position zu bewegen, in der das Gehäuse (300) aus der Außenwand (201) des Luftfahrzeugs (200) hervorragt.

2. Luftfahrzeug nach Anspruch 1, bei dem das Gehäuse (300) wenigstens eine Öffnung (600) stromaufwärts und wenigstens eine Öffnung (601) stromabwärts in der Flugrichtung des Luftfahrzeugs (200) umfasst.

3. Luftfahrzeug nach den Ansprüchen 1 oder 2, bei dem der Wärmetauscher (4) im stromaufwärtigen Teil des Gehäuses (300) und der Diwasserstoffgenerator (5) im stromabwärtigen Teil des Gehäuses (300) in der Flugrichtung des Luftfahrzeugs (200) angeordnet ist.

4. Luftfahrzeug nach den Ansprüchen 1 oder 2, bei dem der Diwasserstoffgenerator (5) im stromaufwärtigen Teil des Gehäuses (300) und der Wärmetauscher (4) im stromabwärtigen Teil des Gehäuses (300) in der Flugrichtung des Luftfahrzeugs (200) angeordnet ist.

5. Luftfahrzeug nach einem der Ansprüche 1 bis 4, bei dem das Gehäuse (300) ferner einen Lüfter (700) umfasst, der dazu ausgelegt ist, die durch die Brennstoffzelle (1) erzeugte Wärmeenergie (300) abzuleiten, wenn sich das Gehäuse (300) in der zweiten Position befindet und die Bewegungsgeschwindigkeit des Luftfahrzeugs (200) unterhalb eines vorbestimmten Schwellwertes liegt.

6. Luftfahrzeug nach einem der Ansprüche 1 bis 5, bei dem das Betätigungssystem (400, 400') mechanische Bewegungsmittel umfasst, die dazu ausgelegt sind, das Gehäuse (300) aus der ersten Position in die zweite Position zu bewegen.

7. Luftfahrzeug nach einem der Ansprüche 1 bis 5, bei dem das Betätigungssystem (400") elektromagnetische Bewegungsmittel umfasst, die dazu ausgelegt sind, das Gehäuse (300) aus der ersten Position in die zweite Position zu bewegen.

8. Luftfahrzeug nach einem der Ansprüche 1 bis 7, bei dem die Brennstoffzelle (1) eine Brennstoffzelle mit Hochtemperatur-Protonenaustauschmembran ist.

9. Verfahren zum Kühlen einer Vorrichtung zur Versorgung mit elektrischer Energie eines Luftfahrzeugs, wobei die Versorgungsvorrichtung ein Gehäuse (300) umfasst, wobei dieses Gehäuse (300) wenigstens umfasst:
- eine Brennstoffzelle (1) zur Erzeugung von elektrischer Energie, die eine Anode (-) und eine Kathode (+) umfasst,
- einen Diwasserstoffgenerator (5),
- einen Gasversorgungskreis, der den Diwasserstoffgenerator (5) mit der Anode (-) der Brennstoffzelle (1) verbindet,
- eine Sauerstoffversorgungsvorrichtung, die dazu ausgelegt ist, die Kathode (+) der Brennstoffzelle (1) zu versorgen,
- einen Kreis zum Kühlen (3) der Brennstoffzelle (1), der wenigstens einem Wärmetauscher (4) zugeordnet ist,
wobei dieses Verfahren **dadurch gekennzeichnet ist, dass** es das Bewegen des Gehäuses (300) aus einer ersten Position, in der das Gehäuse (300) innerhalb einer Außenwand (201) des Luftfahrzeugs (200) untergebracht ist, zu einer zweiten Position, in der das Gehäuse (300) aus der Außenwand (201) des Luftfahrzeugs (200) hervorragt, umfasst.

10. Verfahren nach Anspruch 9, ferner umfassend einen Schritt des Belüftens innerhalb des Gehäuses (300), wenn sich das Gehäuse (300) in der zweiten Position befindet und die Bewegungsgeschwindigkeit des Luftfahrzeugs (200) unterhalb eines vorbestimmten Schwellwertes liegt.

## Claims

1. An electrical power supply device in an aircraft, the device comprising an enclosure (300), the enclosure (300) containing at least:
- a fuel cell (1) for generating electricity and comprising an anode (+) and a cathode (-);
- a dihydrogen generator (5);
- a gas feed circuit connecting the dihydrogen generator (5) to the anode (-) of the fuel cell (1);
- an oxygen feed device configured to feed the cathode (+) of the fuel cell (1); and
- a cooling circuit (3) for cooling the fuel cell (1) and associated with at least one heat exchanger (4);
the device being **characterized in that** the enclosure (300) is mounted on an actuator system (400, 400', 400"), the actuator system (400, 400', 400") being configured to move the enclosure (300) from a first position in which the enclosure (300) is housed inside an outer wall (201) of the aircraft (200), to a second position in which the enclosure (300) projects from the outer wall (201) of the aircraft (200).

2. A power supply device according to claim 1, wherein the enclosure (300) includes at least one upstream opening (600) and at least one downstream opening (601), "upstream" and "downstream" being relative to the flight direction of the aircraft (200).

3. A power supply device according to claim 1 or claim 2, wherein the heat exchanger (4) is arranged at the upstream end of the enclosure (300) and the dihydrogen generator (5) is arranged at the downstream end of the enclosure (300), "upstream" and "downstream" being relative to the flight direction of the aircraft (200).

4. A power supply device according to claim 1 or claim 2, wherein the dihydrogen generator (5) is arranged at the upstream end of the enclosure (300) and the heat exchanger (4) is arranged at the downstream end of the enclosure (300), "upstream" and "downstream" being relative to the flight direction of the aircraft (200).

5. A power supply device according to any one of claims 1 to 4, wherein the enclosure (300) further comprises a fan (700) configured to discharge the heat energy generated by the fuel cell (1) when the enclosure (300) is in the second position and the travel speed of the aircraft (200) is below a predetermined threshold.

6. A power supply device according to any one of claims 1 to 5, wherein the actuator system (400, 400') comprises mechanical movement means configured to move the enclosure (300) from the first position to the second position.

7. A power supply device according to any one of claims 1 to 5, wherein the actuator system (400") comprises electromagnetic movement means configured to move the enclosure (300) from the first position to the second position.

8. A power supply device according to any one of claims 1 to 7, wherein the fuel cell (1) is a high temperature proton exchange membrane fuel cell.

9. A method of cooling an electrical power supply device, the power supply device comprising an enclosure (300), the enclosure (300) containing at least:
- a fuel cell (1) for generating electricity and comprising an anode (-) and a cathode (+);
- a dihydrogen generator (5);
- a gas feed circuit connecting the dihydrogen generator (5) to the anode (-) of the fuel cell (1);
- an oxygen feed device configured to feed the cathode (+) of the fuel cell (1); and
- a cooling circuit (3) for cooling the fuel cell (1) and associated with at least one heat exchanger (4);
the method being **characterized in that** it comprises moving the enclosure (300) from a first position in which the enclosure (300) is housed inside an outer wall (201) of the aircraft (200) to a second position in which the enclosure (300) projects from the outer wall (201) of the aircraft (200).

10. A method according to claim 9, further comprising a step of using a fan to ventilate the inside of the enclosure (300) when the enclosure (300) is in the second position and the travel speed of the aircraft (200) is below a predetermined threshold.
